# EUROPÄISCHE PATENTSCHRIFT

(11) **EP 2 529 879 B1**
(45) Veröffentlichungstag und Bekanntmachung des Hinweises auf die Patenterteilung: **07.08.2013**
(21) Anmeldenummer: 11168017.9
(22) Anmeldetag: 30.05.2011
(51) Int. Cl.: B23Q 1/01

(54) **Führungseinrichtung für eine Bewegungseinheit einer Werkzeugmaschine sowie Werkzeugmaschine mit einer derartigen Führungseinrichtung**
Guide device for a motion unit of a machine tool and machine tool with such a guide device
Dispositif de guidage pour une unité mobile d'une machine-outil et machine-outil dotée d'un tel dispositif de guidage

(43) Veröffentlichungstag der Anmeldung: 05.12.2012
(73) Patentinhaber: Trumpf Sachsen GmbH, 01904 Neukirch (DE)
(72) Erfinder: Harnisch, Gunter, 01936 Königsbrück (DE); Knobel, Carsten, 02689 Sohland (DE)
(74) Vertreter: Kohler Schmid Möbus

(56) Entgegenhaltungen:
- FR-A1- 2 642 692
- FR-A1- 2 820 070
- GB-A- 2 216 440

## Beschreibung

Die Erfindung betrifft eine Führungseinrichtung für eine in Längsrichtung der Führungseinrichtung bewegbare Bewegungseinheit einer Werkzeugmaschine, mit einem Hohlprofilträger,
- der mit seiner Längsrichtung in Längsrichtung der Führungseinrichtung verläuft,
- der einen sich in Längsrichtung des Hohlprofilträgers erstreckenden Grundkörper-Hohlraum und eine diesen begrenzende und einen eckigen Querschnitt an dem Hohlprofilträger ausbildende Grundkörperwand aufweist,
- der an der Grundkörperwand an deren dem Grundkörper-Hohlraum zugewandten Innenseite mit einem in Längsrichtung des Hohlprofilträgers verlaufenden inneren Versteifungselement versehen ist und
- der an der von dem Grundkörper-Hohlraum abliegenden Außenseite der Grundkörperwand einen gegenüber dem Querschnitt des Grundkörper-Hohlraumes querschnittsreduzierten äußeren Hohlraum aufweist, wobei der äußere Hohlraum sich mit seiner Längsrichtung in Längsrichtung des Hohlprofilträgers erstreckt und von einer äußeren Hohlraumwand begrenzt ist, die ihrerseits mit der Grundkörperwand verbunden ist.

Die Erfindung betrifft des Weiteren eine Werkzeugmaschine zum Bearbeiten von Werkstücken, insbesondere von Blechen, mit einer Bewegungseinheit sowie mit einer Führungseinrichtung der vorstehenden Art.

Auch im Werkzeugmaschinenbau wird großer Wert auf massearme Konstruktionen gelegt. Von besonderer Bedeutung ist der Leichtbau für bewegte Maschinenkomponenten wie etwa verfahrbare Ausleger und verfahrbare Portale. Derartige Maschinenkomponenten müssen ungeachtet ihrer geringen Masse eine hohe Steifigkeit aufweisen. Dies gilt insbesondere für bewegte Maschinenkomponenten, die als Führungseinrichtungen für Bewegungseinheiten, beispielsweise als Längsführungen für bewegliche Bearbeitungswerkzeuge, dienen.

Eine Führungseinrichtung der vorstehenden Art ist bekannt aus GB 2 216 440 A. Im Einzelnen offenbart diese Druckschrift als Führungseinrichtung einen Hohlprofilträger, auf dem ein Schlitten mit einem Gesteinsbohrer verfahrbar gelagert ist. Der Hohlprofilträger ist als U-Profil ausgebildet und weist eine Grundseite sowie zwei Schenkel auf. An der Außenseite der Schenkel sind Führungsschienen zur Führung des Schlittens angeordnet. Als Führungsschienen sind Hohlprofile in Form von Vierkantrohren vorgesehen, die sich in Längsrichtung des Hohlprofilträgers erstrecken. Das Innere der Führungsschienen bildet jeweils einen äußeren Hohlraum. Zur Fixierung der Führungsschienen an dem Hohlprofilträger dienen Schrauben, die durch Bohrungen in den Schenkeln des Hohlprofilträgers in das Innere der Führungsschienen ragen und zum Teil mit dort angeordneten Muttern verschraubt sind.

Weiteren Stand der Technik bilden die Laserschneidmaschinen der TruLaser^{®} Serie 7000, die von der Firma TRUMPF, 71254 Ditzingen, Deutschland angeboten werden. Bei diesen Maschinen handelt es sich um Laser-Flachbettmaschinen, an denen eine Werkstückauflage von einem Portal mit verhältnismäßig großer Spannweite in der ersten Achsrichtung einer horizontalen Ebene überfahren wird. Der Querträger des Portals verläuft in der zweiten Achsrichtung der horizontalen Ebene. Längs des Portal-Querträgers verfahren als Bewegungseinheiten zwei Laserschneidköpfe mit jeweils einem an dem Portal-Querträger geführten Werkzeugschlitten.

Der Portal-Querträger der TruLaser^{®} Serie 7000 ist in Leichtbauweise ausgeführt. Vier dünne Stahlbleche sind an ihren Längskanten zu einem Hohlprofilträger mit Rechteckquerschnitt verschweißt. Die miteinander verschweißten Stahlbleche umschließen einen Hohlraum des Hohlprofilträgers und bilden dementsprechend eine Hohlraumwand. An der dem Hohlraum zugewandten Innenseite sind in die Ecken der von den Stahlblechen gebildeten Hohlraumwand Eckversteifungen eingeschweißt, die sich längs des Hohlprofilträgers erstrecken.

Die Aufgabe der vorliegenden Erfindung besteht ausgehend von dem gattungsgemäßen Stand der Technik darin, die vorbekannten Führungseinrichtungen und die damit versehenen Werkzeugmaschinen dahingehend weiterzubilden, dass die Führungseinrichtungen flexibel für die im Einzelfall zu beherrschenden Belastungen ausgelegt werden können.

Erfindungsgemäß gelöst wird diese Aufgabe durch die Führungseinrichtung gemäß Patentanspruch 1 und durch die Werkzeugmaschine gemäß Patentanspruch 13.

Gemäß Patentanspruch 1 weist der Hohlprofilträger der Führungseinrichtung zusätzlich zu dem mit dem inneren Versteifungselement versehenen Hohlraum einen an dessen Außenseite angeordneten äußeren Hohlraum auf. Der Hohlraum mit dem inneren Versteifungselement und dessen Hohlraumwand bilden einen Grundkörper des Hohlprofilträgers. Der äußere Hohlraum besitzt einen kleineren Querschnitt als der Grundkörper-Hohlraum und erstreckt sich ebenso wie dieser in Längsrichtung des Hohlprofilträgers. Die äußere Hohlraumwand ist mit der Grundkörperwand verbunden. Der äußere Hohlraum bietet eine Möglichkeit zur zusätzlichen Versteifung des Hohlprofilträgers. Von dieser Möglichkeit wird dann Gebrauch gemacht, wenn die im Einzelfall auf den Hohlprofilträger wirkende Belastung dies erfordert. Erfindungsgemäß ist demnach die Versteifung des Hohlprofilträgers modular gestaltet. Reicht die an der Innenseite der Grundkörperwand des Hohlprofilträgers vorgesehene Versteifung aus, um die auf den Hohlprofilträger wirkende Belastung zu beherrschen, so bleibt der äußere Hohlraum des Hohlprofilträgers leer. Andernfalls wird in den äußeren Hohlraum des Hohlprofilträgers anwendungsbezogen eine zusätzliche Versteifung eingebracht. Die Anzahl der an dem Hohlprof`ilträger auf die Außenseite des Grundkörpers aufgesetzten äußeren Hohlräume kann erfindungsgemäß unterschiedlich gewählt werden. Denkbar sind ein einziger aber auch mehrere äußere Hohlräume. Sind mehrere äußere Hohlräume vorhanden, so können je nach Bedarf alle oder nur einzelne der Hohlräume mit einem äußeren Versteifungselement versehen werden. Auch das oder die äußeren Versteifungselemente können bedarfsabhängig gewählt werden. Beispielsweise unterschiedliche Materialien und/oder unterschiedliche Querschnitte äußerer Versteifungselemente bedingen eine unterschiedliche Versteifungswirkung. Durch die Auswahl bestimmter äußerer Hohlräume für die Unterbringung äußerer Versteifungselemente und mittels der Versteifungselemente selbst kann insbesondere eine von der Belastungsrichtung abhängige Zusatzversteifung des Hohlprofilträgers realisiert werden. Die für die zusätzliche Versteifungswirkung unerlässliche Verbindung zwischen der äußeren Hohlraumwand und der Grundkörperwand ist erfindungsgemäß dadurch hergestellt, dass die äußere Hohlraumwand und die Grundkörperwand aneinander angeformt oder miteinander verschweißt sind.

Besondere Ausführungsarten der in dem unabhängigen Patentanspruch 1 beschriebenen Erfindung ergeben sich aus den abhängigen Patentansprüchen 2 bis 12, eine besondere Ausführungsart der Erfindung nach dem unabhängigen Patentanspruch 13 ergibt sich aus dem abhängigen Patentanspruch 14.

Von besonderer Bedeutung für die erzielbare Steifigkeit des Hohlprofilträgers ist die Lage sowohl der im Innern als auch der außerhalb des Grundkörpers vorgesehenen Versteifungen, insbesondere deren Lage bezüglich des Flächenschwerpunktes des Hohlprofilträgerquerschnittes bzw. der Schwerachse des Hohlprofilträgers.

Im Falle der Erfindungsbauart gemäß Patentanspruch 2 ist wenigstens eine Ecke der Grundkörperwand im Grundkörperinnern mit einem Versteifungselement versehen. Gemäß Patentanspruch 3 ist ein äußerer Hohlraum zur Aufnahme einer zusätzlichen Versteifung an wenigstens einer Ecke der Grundkörperwand vorgesehen.

Patentanspruch 4 betrifft eine Bauart der Erfindung, im Falle derer von der Möglichkeit zur zusätzlichen Versteifung des Hohlprofilträgers Gebrauch gemacht wird.

Die Ausgestaltung der modularen Zusatzversteifung im Einzelnen richtet sich erfindungsgemäß nach den Erfordernissen des jeweiligen Belastungsfalls.

Ausweislich Patentanspruch 5 ist das äußere Versteifungselement länglich ausgebildet und es erstreckt sich mit seiner Längsrichtung in Längsrichtung des Hohlprofilträgers.

Eine besonders wirksame, weil spielfreie zusätzliche Versteifung wird in weiterer Ausgestaltung der Erfindung dadurch erzielt, dass das äußere Versteifungselement mit der Innenseite der äußeren Hohlraumwand in Kontakt ist (Patentanspruch 6).

Als Werkstoff für das oder die äußeren Versteifungselemente kommen erfindungsgemäß und in Abhängigkeit von der zu beherrschen Belastung unterschiedliche Materialien in Frage.

Beispielsweise die erfindungsgemäße Führungseinrichtung nach Patentanspruch 7 ist mit einem äußeren Versteifungselement aus Metall versehen. Versteifungselemente aus Metall werden vorrangig dann eingesetzt, wenn allein eine Erhöhung der Steifigkeit des Hohlprofilträgers gewünscht ist. Außerdem sind Versteifungselemente aus Metall kostengünstig.

Soll die Erhöhung der Steifigkeit des Hohlprofilträgers mit minimaler Massezunahme erzielt werden, so werden erfindungsgemäß Versteifungselemente aus Kunststoff, insbesondere aus faserverstärktem Kunststoff, bevorzugt (Patentansprüche 8, 9). Flexibel wählbar sind dabei beispielsweise das Fasermaterial und/oder der Faservolumengehalt. Die Matrix für die Verstärkungsfasern kann etwa aus Epoxidharz bestehen. Als besonders wirksam haben sich Versteifungselemente aus kohlenstofffaserverstärktem Kunststoff erwiesen. Bei Versuchen mit derartigen Versteifungselementen wurde eine Verdoppelung der Steifigkeit eines Hohlprofilträgers bei einer Masseerhöhung um lediglich fünf Prozent erreicht. Im Übrigen können in den äußeren Hohlraum des Hohlprofilträgers eingebrachte Kunststoffe das Schwingungsverhalten des Hohlprofilträgers durch eine dämpfende Wirkung verbessern.

In weiterer bevorzugter Ausgestaltung der Erfindung ist als äußeres Versteifungselement ein äußeres Versteifungsprofil vorgesehen (Patentanspruch 10). Ein derartiges Versteifungsprofil lässt sich auf besonders einfache Art und Weise in den hierfür vorgesehenen äußeren Hohlraum des Hohlprofilträgers einbringen. Besteht ein äußeres Versteifungselement aus einem im Ausgangszustand fließfähigen Material, so kann der betreffende äußere Hohlraum des Hohlprofilträgers alternativ mit dem betreffenden fließfähigen Material befüllt werden. Nach dem Verfestigen bzw. Aushärten ergibt sich dann ein äußeres Versteifungselement, welches den Querschnitt des zugehörigen äußeren Hohlraumes vorzugsweise vollständig ausfüllt.

Insbesondere in Anwendungsfällen, in denen eine Zusatzversteifung mit möglichst geringer zusätzlicher Masse realisiert werden soll, kommen erfindungsgemäß äußere Versteifungselemente bzw. Verstelfungsprofile in Form von Hohlprofllen zum Einsatz (Patentanspruch 11).

Zusätzlich zu der oder den in Längsrichtung des Hohlprofllträgers verlaufenden inneren Versteifungen und gegebenenfalls zusätzlich zu dem oder den äußeren Versteifungselementen weist die Führungseinrichtung nach Patentanspruch 12 wenigstens ein inneres Versteifungselement auf, das plattenartig ausgebildet ist und sich mit seiner Hauptebene in Querrichtung des Hohlprofilträgers erstreckt. Als derartige Versteifungselemente können sogenannte Schottbieche vorgesehen sein, die im Innern des Grundkörper-Hohlraums angebracht und dabei in Längsrichtung des Hohlprofilträgers voneinander beabstandet sind.

Patentanspruch 14 betrifft eine Bauart der erfindungsgemäßen Werkzeugmaschine, im Falle derer die für die Bewegungseinheit vorgesehene Führungseinrichtung in ihrer Querrichtung bewegt wird. Eine derartige Führungseinrichtung ist aufgrund der dynamischen Beanspruchung besonderen Belastungen unterworfen und muss daher eine ausgeprägte Steifigkeit aufweisen. Gleichzeitig darf eine derartige Führungseinrichtung als bewegtes Maschinenelement nur eine möglichst geringe Masse besitzen. Beide Anforderungen können durch die erfindungsgemäße Führungseinrichtung erfüllt werden.

Nachstehend wird die Erfindung anhand beispielhafter schematischer Darstellungen näher erläutert. Es zeigen:
- Figur 1: einen Portal-Querträger einer Laserschneidmaschine,
- Figur 2: das Detail II von Figur 1,
- Figur 3: den Portal-Querträger gemäß Figur 1 zusätzlich versteift und
- Figur 4: das Detail IV von Figur 3.

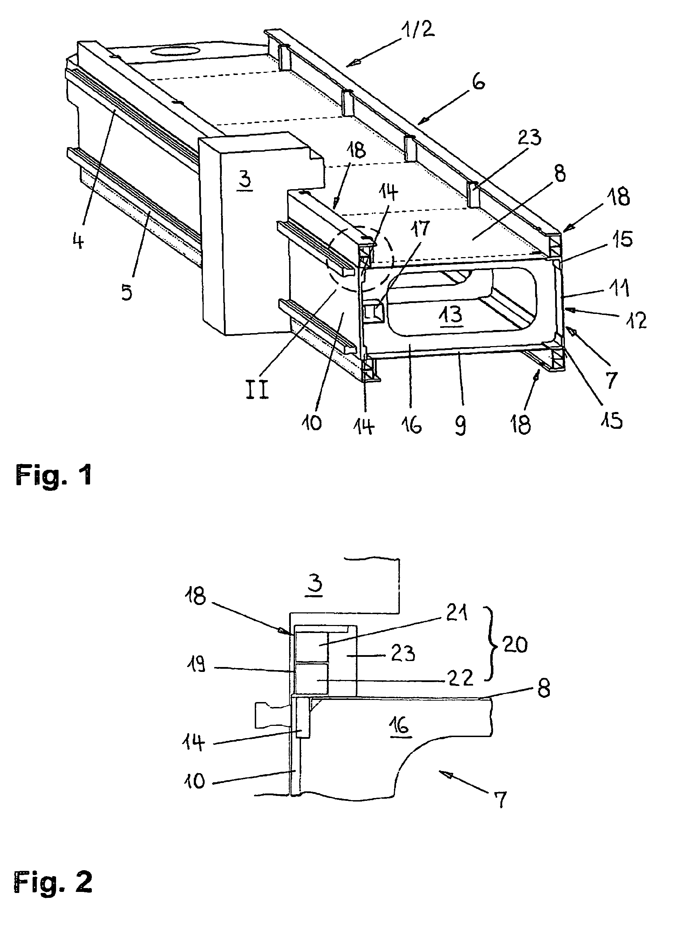

In Figur 1 ist eine als Laser-Flachbettmaschine 1 ausgeführte Werkzeugmaschine im Umfang eines Portal-Querträgers 2 und eines Werkzeugschlittens 3 dargestellt. Der Portal-Querträger 2 dient als Führungseinrichtung für den Werkzeugschlitten 3, der seinerseits eine Bewegungseinheit bildet. An dem Werkzeugschlitten 3 ist ein der Einfachheit halber nicht gezeigter Laserschneidkopf montiert. Für andere Maschinenbauarten, beispielsweise für Fräsmaschinen, kann die Einheit aus Portal-Querträger 2 und Werkzeugschlitten 3 übernommen werden.

In gewohnter Weise ist der Werkzeugschlitten 3 an Führungsschienen 4, 5 des Portal-Querträgers 2 in dessen Längsrichtung geführt. Die Führungsschienen 4, 5 sind ihrerseits an einem Hohlprofilträger 6 des Portal-Querträgers 2 montiert.

Bei dem Hohlprofilträger 6 handelt es sich um eine Schweißkonstruktion in Leichtbauweise. Ein Grundkörper 7 des Hohlprofilträgers 6 ist aus einem oberen Deckblech 8, einem unteren Deckblech 9, einem vorderen Seitenblech 10 und einem hinteren Seitenblech 11 zusammengesetzt. Die genannten Bleche sind an ihren Längskanten miteinander verschweißt und bilden eine Grundkörperwand 12 des im Querschnitt rechteckigen Grundkörpers 7 aus. Von der Rechteckform abweichende Querschnitte des Hohlprofil-Grundkörpers sind denkbar.

Die Grundkörperwand 12 begrenzt einen in ihrem Innern gelegenen Grundkörper-Hohlraum 13. In jeder Ecke ist die Grundkörperwand 12 an ihrer Innenseite mit einem inneren Versteifungselement versehen. Als innere Versteifungselemente verwendet werden Metall-Vollprofile 14 in den Ecken zwischen dem vorderen Seitenblech 10 und den Deckblechen 8, 9 sowie Metallwinkel 15 in den Ecken zwischen dem hinteren Seitenblech 10 und den Deckblechen 8, 9.

Bei den Deckblechen 8, 9 und auch bei den Seitenblechen 10, 11 handelt es sich in dem gezeigten Beispielsfall um Zuschnitte aus Stahlblech mit einer Dicke von 1,5mm. Auch die Metall-Vollprofile 14 und die Metallwinkel 15 bestehen aus Stahl.

Neben den Metall-Vollprofilen 14 und den Metallwinkeln 15 dienen innere Versteifungselemente in Form von Schottblechen 16 zur Versteifung des Grundkörpers 7 des Hohlprofilträgers 6. Die Schottbleche 16 besitzen rahmenartige Gestalt und verlaufen mit ihrer Hauptebene in Querrichtung des Hohlprofilträgers 6. Ein Versteifungsprofil 17 ist als weiteres in Längsrichtung des Hohlprofilträgers 6 verlaufendes inneres Versteifungselement vorgesehen und ist zur Versteifung des vorderen Seitenblechs 10 auf dessen Innenseite aufgesetzt. Ebenso wie die Metall-Vollprofile 14 und die Metallwinkel 15 ist das Versteifungsprofil 17 über die gesamte Länge des Hohlprofilträgers 6 mit der Grundkörperwand 12 verschweißt.

An der Außenseite des Grundkörpers 7 ist an jeder Ecke des Grundkörpers 7 ein äußerer Hohlkörper 18 auf die Grundkörperwand 12 aufgesetzt. Jeder der äußeren Hohlkörper 18 besitzt eine mit der Grundkörperwand 12 verschweißte äußere Hohlraumwand 19 (Figur 2). Diese begrenzt jeweils einen äußeren Hohlraum 20, der in zwei äußere Hohlkammern 21, 22 unterteilt ist. Versteifungsbleche 23 sorgen für eine Stabilisierung der Verbindung zwischen der äußeren Hohlraumwand 19 und der Grundkörperwand 12. An Stelle der Versteifungsbleche 23 können beispielsweise auch Versteifungsprofile vorgesehen sein. Der Querschnitt des äußeren Hohlraumes 20 ist wesentlich kleiner als der Querschnitt des Grundkörper-Hohlraumes 13.

In ihrem Innern bieten die äußeren Hohlkörper 18 Raum für die Unterbringung von äußeren Versteifungselementen. Ob und gegebenenfalls in welchem Umfang äußere Versteifungselemente in die äußeren Hohlkörper 18 des Hohlprofilträgers 6 eingebracht werden, hängt von der Belastung des Hohlprofilträgers 6 bzw. des gesamten Portal-Querträgers 2 in dem jeweiligen Einsatzfall ab.

Gemäß den Figuren 1 und 2 kommt der Portal-Querträger 2 ohne jegliches äußere Versteifungselement aus. Für den betreffenden Anwendungsfall sind die im Innern des Grundkörpers 7 vorgesehenen Versteifungen des Hohlprofilträgers 6 ausreichend.

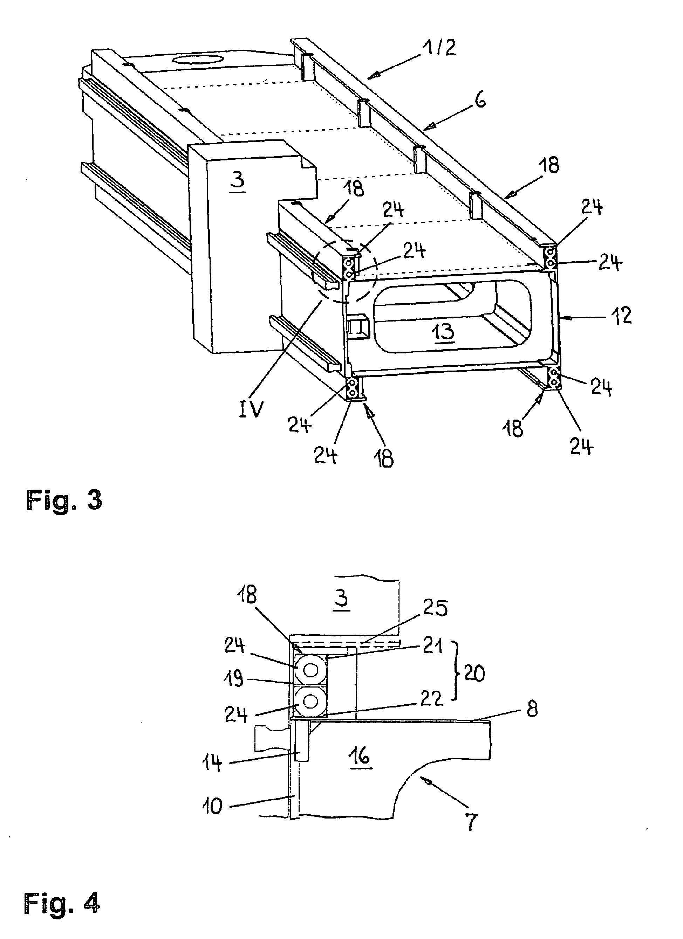

Die Figuren 3 und 4 zeigen den Portal-Querträger 2 in der Ausführung für einen Anwendungsfall, der zusätzlich zu den inneren Versteifungsmaßnahmen gemäß den Figuren 1 und 2 eine äußere Versteifung des Hohlprofilträgers 6 erfordert.

Gemäß den Figuren 3 und 4 ist in beide äußeren Hohlkammern 21, 22 sämtlicher äußeren Hohlkörper 18 des Hohlprofilträgers 6 jeweils ein äußeres Versteifungselement 24 eingesetzt. Bei den äußeren Versteifungselementen 24 handelt es sich in dem dargestellten Beispielsfall um Versteifungs-Hohlprofile, die von einer Stirnseite des Hohlprofilträgers 6 her in die äußeren Hohlkammern 21, 22 der äußeren Hohlkörper 18 eingeführt worden sind. Die äußeren Versteifungselemente 24 erstrecken sich über die gesamte Länge des Hohlprofilträgers 6 und liegen von innen her an der jeweiligen äußeren Hohlraumwand 19 an. Anstelle der in den Figuren 3 und 4 dargestellten Versteifungs-Hohlprofile kommen auch Versteifungs-Vollprofile in Frage. Der Werkstoff der äußeren Versteifungselemente 24 wird in Abhängigkeit von dem jeweiligen Anwendungsfall gewählt. Bevorzugt werden äußere Versteifungselemente 24 aus faserverstärktem Kunststoff, insbesondere aus kohlenstofffaserverstärktem Kunststoff ("CFK").

Abweichend von den in den Figuren 3 und 4 veranschaulichten Verhältnissen ist es denkbar, äußere Versteifungselemente 24 nicht in sämtlichen sondern nur in einzelnen der äußeren Hohlkörper 18 des Hohlprofilträgers 6 und/oder nicht in beiden sondern nur in einer der äußeren Hohlkammern 21, 22 anzuordnen. Dadurch kann die Steifigkeit des Hohlprofilträgers 6 bzw. des Portal-Querträgers 2 flexibel auf unterschiedliche Belastungsfälle abgestimmt werden. Insbesondere realisierbar ist eine richtungsabhängige Versteifung des Hohlprofilträgers 6 bzw. des Portal-Querträgers 2.

In Figur 4 angedeutet ist ein oberes Abdeckblech 25, mit welchem der Hohlprofilträger 6 an seiner Oberseite beplankt sein kann. Ein entsprechendes unteres Abdeckblech kann den unteren Abschluss des Hohlprofilträgers 6 bilden. Mit Hilfe des oberen Abdeckblechs 25 und des genannten unteren Abdeckblechs erhält der Hohlprofilträger 6 insgesamt eine im Querschnitt rechteckige Kontur.

## Patentansprüche

1. Führungseinrichtung für eine in Längsrichtung der Führungseinrichtung bewegbare Bewegungseinheit (3) einer Werkzeugmaschine (1), mit einem Hohlprofilträger (6),
• der mit seiner Längsrichtung in Längsrichtung der Führungseinrichtung verläuft,
• der einen sich in Längsrichtung des Hohlprofilträgers (6) erstreckenden Grundkörper-Hohlraum (13) und eine diesen begrenzende und einen eckigen Querschnitt an dem Hohlprofilträger (6) ausbildende Grundkörperwand (12) aufweist,
• der an der Grundkörperwand (12) an deren dem Grundkörper-Hohlraum (13) zugewandten Innenseite mit einem in Längsrichtung des Hohlprofilträgers (6) verlaufenden inneren Versteifungselement (14, 15, 17) versehen ist und
• der an der von dem Grundkörper-Hohlraum (13) abliegenden Außenseite der Grundkörperwand (12) einen gegenüber dem Querschnitt des Grundkörper-Hohlraumes (13) querschnittsreduzierten äußeren Hohlraum (20) aufweist, wobei der äußere Hohlraum (20) sich mit seiner Längsrichtung in Längsrichtung des Hohlprofilträgers (6) erstreckt und von einer äußeren Hohlraumwand (19) begrenzt ist, die ihrerseits mit der Grundkörperwand (12) verbunden ist,
**dadurch gekennzeichnet, dass**
die äußere Hohlraumwand (19) und die Grundkörperwand (12) derart aneinander angeformt oder derart miteinander verschweißt sind, dass sich ein leerer äußerer Hohlraum (20) ergibt, der dafür vorgesehen ist, zur zusätzlichen Versteifung des Hohlprofilträgers (6) ein äußeres Versteifungselement (24) in seinem Inneren aufzunehmen.

2. Führungselnrichtung nach Anspruch 1, **dadurch gekennzeichnet, dass** das innere Versteifungselement (14, 15) als Eckversteifung an einer Ecke der Grundkörperwand (12) vorgesehen ist.

3. Führungseinrichtung nach einem der vorhergehenden Ansprüche, **dadurch gekennzeichnet, dass** der äußere Hohlraum (20) des Hohlprofilträgers (6) an einer Ecke der Grundkörperwand (12) angeordnet ist.

4. Führungseinrichtung nach einem der vorhergehenden Ansprüche, **dadurch gekennzeichnet, dass** der äußere Hohlraum (20) des Hohlprofliträgers (6) ein äußeres Versteifungselement (24) enthält.

5. Führungseinrichtung nach Anspruch 4, **dadurch gekennzeichnet, dass** das äußere Versteifungselement (24) länglich ausgebildet ist und sich mit seiner Längsrichtung in Längsrichtung des Hohlprofilträgers (6) erstreckt.

6. Führungseinrichtung nach Anspruch 4 oder Anspruch 5, **dadurch gekennzeichnet, dass** das äußere Versteifungselement (24) mit der Innenseite der äußeren Hohlraumwand (19) in Kontakt ist.

7. Führungseinrichtung nach einem der Ansprüche 4 bis 6, **dadurch gekennzeichnet, dass** als äußeres Versteifungselement (24) ein Versteifungselement aus Metall vorgesehen ist.

8. Führungseinrichtung nach einem der Ansprüche 4 bis 6, **dadurch gekennzeichnet, dass** als äußeres Versteifungselement (24) ein Versteifungselement aus Kunststoff vorgesehen ist.

9. Führungseinrichtung nach Anspruch 8, **dadurch gekennzeichnet, dass** als äußeres Versteifungselement (24) ein Versteifungselement aus faserverstärktem Kunststoff, Insbesondere aus kohlenstofffaserverstärktem Kunststoff, vorgesehen ist.

10. Führungseinrichtung nach einem der Ansprüche 4 bis 9, **dadurch gekennzeichnet, dass** als äußeres Versteifungselement (24) ein äußeres Versteifungsprofil vorgesehen ist.

11. Führungseinrichtung nach Anspruch 10, **dadurch gekennzeichnet, dass** das als äußeres Versteifungselement (24) vorgesehene Versteifungsprofil als äußeres Versteifungs-Hohlprofil ausgebildet ist.

12. Führungseinrichtung nach einem der vorhergehenden Ansprüche, **dadurch gekennzeichnet, dass** der Grundkörper-Hohlraum (13) des Hohlprofllträgers (6) ein inneres Versteifungselement (23) enthält, das plattenartig ausgebildet ist und sich mit seiner Hauptebene in Querrichtung des Hohlprofilträgers (6) erstreckt.

13. Werkzeugmaschine zum Bearbeiten von Werkstücken, Insbesondere von Blechen, mit einer Bewegungseinheit (3) sowie mit einer Führungseinrichtung (2) hierfür, wobei die Bewegungseinheit (3) an der Führungseinrichtung (2) In deren Längsrichtung bewegbar Ist, **dadurch gekennzeichnet dass** als Führungseinrichtung (2) eine Führungseinrichtung (2) nach einem der vorhergehenden Ansprüche vorgesehen Ist.

14. Werkzeugmaschine nach Anspruch 13, **dadurch gekennzeichnet, dass** die Führungseinrichtung (2) In Ihrer Querrichtung bewegbar ist.

## Claims

1. Guide device for a movement unit (3) of a machine tool (1), which movement unit can be moved in a longitudinal direction of the guide device, having a hollow profile beam (6),
• which extends with the longitudinal direction thereof in the longitudinal direction of the guide device,
• which has a base member hollow space (13) which extends in the longitudinal direction of the hollow profile beam (6) and which has a base member wall (12) which delimits the base member hollow space (13) and which forms an angular cross-section on the hollow profile beam (6),
• which is provided, on the base member wall (12) at the inner side thereof facing the base member hollow space (13), with an internal reinforcement element (14, 15, 17) which extends in the longitudinal direction of the hollow profile beam (6) and
• which has, at the outer side of the base member wall (12) remote from the base member hollow space (13), an outer hollow space (20) which is reduced in terms of cross-section relative to the cross-section of the base member hollow space (13), the outer hollow space (20) extending with the longitudinal direction thereof in the longitudinal direction of the hollow profile beam (6) and being delimited by an external hollow space wall (19) which itself is connected to the base member wall (12),
**characterised in that**
the external hollow space wall (19) and the base member wall (12) are formed in such a manner on each other or welded to each other in such a manner that there is produced an empty hollow space (20) which is provided, for additional reinforcement of the hollow profile beam (6), to receive in the inner space thereof an external reinforcement element (24).

2. Guide device according to claim 1, **characterised in that** the internal reinforcement element (14, 15) is provided as a corner reinforcement at a corner of the base member wall (12).

3. Guide device according to either of the preceding claims, **characterised in that** the external hollow space (20) of the hollow profile beam (6) is arranged at a corner of the base member wall (12).

4. Guide device according to any one of the preceding claims, **characterised in that** the external hollow space (20) of the hollow profile beam (6) contains an external reinforcement element (24).

5. Guide device according to claim 4, **characterised in that** the external reinforcement element (24) is constructed in an elongate manner and extends with the longitudinal direction thereof in the longitudinal direction of the hollow profile beam (6).

6. Guide device according to claim 4 or claim 5, **characterised in that** the external reinforcement element (24) is in contact with the inner side of the external hollow space wall (19).

7. Guide device according to any one of claims 4 to 6, **characterised in that** a reinforcement element of metal is provided as an external reinforcement element (24).

8. Guide device according to any one of claims 4 to 6, **characterised in that** a reinforcement element of plastics material is provided as an external reinforcement element (24).

9. Guide device according to claim 8, **characterised in that** a reinforcement element of fibre-reinforced plastics material, in particular of carbon-fibre-reinforced plastics material, is provided as an external reinforcement element (24).

10. Guide device according to any one of claims 4 to 9, **characterised in that** an external reinforcement profile-member is provided as an external reinforcement element (24).

11. Guide device according to claim 10, **characterised in that** the reinforcement profile-member which is provided as an external reinforcement element (24) is constructed as an external reinforcement hollow profile-member.

12. Guide device according to any one of the preceding claims, **characterised in that** the base member hollow space (13) of the hollow profile beam (6) contains an internal reinforcement element (23) which is constructed in a platelike manner and which extends with the main plane thereof in the transverse direction of the hollow profile beam (6).

13. Machine tool for processing workpieces, in particular metal sheets, having a movement unit (3) and having a guide device (2) therefor, the movement unit (3) being able to be moved on the guide device (2) in the longitudinal direction thereof, **characterised in that** a guide device (2) according to any one of the preceding claims is provided as the guide device (2).

14. Machine tool according to claim 13, **characterised in that** the guide device (2) can be moved in the transverse direction thereof.

## Revendications

1. Dispositif de guidage pour une unité de déplacement (3), mobile dans la direction longitudinale du dispositif de guidage, d'une machine-outil (1), avec une poutre profilée creuse (6),
- qui s'étend par sa direction longitudinale dans la direction longitudinale du dispositif de guidage,
- qui présente une cavité de corps de base (13) s'étendant dans la direction longitudinale de la poutre profilée creuse (6) et une paroi de corps de base (12) délimitant cette cavité et formant une section polygonale sur la poutre profilée creuse (6),
- qui est pourvue sur la paroi de corps de base (12), sur le côté intérieur de celle-ci tourné vers la cavité de corps de base (13), d'un élément de renforcement intérieur (14, 15, 17) s'étendant dans la direction longitudinale de la poutre profilée creuse (6), et
- qui présente sur le côté extérieur de la paroi de corps de base (12), éloigné de la cavité de corps de base (13), une cavité extérieure (20) de section réduite par rapport à la section de la cavité de corps de base (13), sachant que la cavité extérieure (20) s'étend par sa direction longitudinale dans la direction longitudinale de la poutre profilée creuse (6) et est délimitée par une paroi extérieure de cavité (19) qui est elle-même reliée à la paroi de corps de base (12),
**caractérisé en ce que** la paroi extérieure de cavité (19) et la paroi de corps de base (12) sont formées l'une sur l'autre ou soudées l'une à l'autre de telle sorte qu'on obtient une cavité extérieure vide (20) qui est prévue pour recevoir à l'intérieur un élément de renforcement extérieur (24) pour le renforcement supplémentaire de la poutre profilée creuse (6).

2. Dispositif de guidage selon la revendication 1, **caractérisé en ce que** l'élément de renforcement intérieur (14, 15) est prévu sous forme de renforcement angulaire dans un coin de la paroi de corps de base (12).

3. Dispositif de guidage selon l'une des revendications précédentes, **caractérisé en ce que** la cavité extérieure (20) de la poutre profilée creuse (6) est disposée dans un coin de la paroi de corps de base (12).

4. Dispositif de guidage selon l'une des revendications précédentes, **caractérisé en ce que** la cavité extérieure (20) de la poutre profilée creuse (6) contient un élément de renforcement extérieur (24).

5. Dispositif de guidage selon la revendication 4, **caractérisé en ce que** l'élément de renforcement extérieur (24) est réalisé oblong et s'étend par sa direction longitudinale dans la direction longitudinale de la poutre profilée creuse (6).

6. Dispositif de guidage selon la revendication 4 ou 5, **caractérisé en ce que** l'élément de renforcement extérieur (24) est en contact avec le côté intérieur de la paroi extérieure de cavité (19).

7. Dispositif de guidage selon l'une des revendications 4 à 6, **caractérisé en ce qu'**un élément de renforcement en métal est prévu comme élément de renforcement extérieur (24).

8. Dispositif de guidage selon l'une des revendications 4 à 6, **caractérisé en ce qu'**un élément de renforcement en matière plastique est prévu comme élément de renforcement extérieur (24).

9. Dispositif de guidage selon la revendication 8, **caractérisé en ce qu'**un élément de renforcement en matière plastique renforcée par des fibres, en particulier en matière plastique renforcée par des fibres de carbone, est prévu comme élément de renforcement extérieur (24).

10. Dispositif de guidage selon l'une des revendications 4 à 9, **caractérisé en ce qu'**un profilé de renforcement extérieur est prévu comme élément de renforcement extérieur (24).

11. Dispositif de guidage selon la revendication 10, **caractérisé en ce que** le profilé de renforcement extérieur prévu comme élément de renforcement extérieur (24) est un profilé creux de renforcement extérieur.

12. Dispositif de guidage selon l'une des revendications précédentes, **caractérisé en ce que** la cavité de corps de base (13) de la poutre profilée creuse (6) contient un élément de renforcement intérieur (23) qui est réalisé du genre plaque et s'étend par son plan principal dans la direction transversale de la poutre profilée creuse (6).

13. Machine-outil pour l'usinage de pièces, en particulier de tôles, avec une unité de déplacement (3) ainsi qu'avec un dispositif de guidage (2) pour cette unité, sachant que l'unité de déplacement (3) est mobile sur le dispositif de guidage (2) dans la direction longitudinale de ce dernier, **caractérisée en ce qu'**un dispositif de guidage (2) selon l'une des revendications précédentes est prévu comme dispositif de guidage (2).

14. Machine-outil selon la revendication 13, **caractérisée en ce que** le dispositif de guidage (2) est mobile dans sa direction transversale.
